# EUROPÄISCHE PATENTSCHRIFT

(11) **EP 3 034 761 B1**
(45) Veröffentlichungstag und Bekanntmachung des Hinweises auf die Patenterteilung: **15.08.2018**
(21) Anmeldenummer: 14198701.6
(22) Anmeldetag: 17.12.2014
(51) Int. Cl.: E05F 15/608

(54) **KARUSSELLTÜR**
REVOLVING DOOR
PORTE À TAMBOUR

(43) Veröffentlichungstag der Anmeldung: 22.06.2016
(73) Patentinhaber: dormakaba Deutschland GmbH, 58256 Ennepetal (DE)
(72) Erfinder: FABRI, Daniel, 58256 Ennepetal (DE); BUSCH, Sven, 58256 Ennepetal (DE)
(74) Vertreter: Balder IP Law, S.L.

(56) Entgegenhaltungen:
- EP-A2- 2 713 479
- EP-A2- 2 754 826
- EP-A2- 2 755 305

## Beschreibung

Die Erfindung betrifft eine Karusselltür mit einem kompakten elektrischen Antrieb.

Bekannt sind Karusselltürantriebe die einen Asynchronmotor mit nachgeschaltetem Getriebe aufweisen. Hierbei kommt typischer Weise ein mehrstufiges Getriebe (Schneckenradgetriebe, Zahnriemenstufen) zum Einsatz. Beispielsweise aus EP 2 072 737 A2 ist ein Antrieb für eine Karusselltür bekannt, wobei das Drehmoment eines herkömmlichen elektrischen Antriebes über ein Umlenkgetriebe auf die Karusselltür übertragen wird. Ferner ist aus EP 2 775 305 A2 eine Karusselltür mit einem Direktantrieb bekannt.

Es ist Aufgabe vorliegender Erfindung eine Karusselltür anzugeben, die bei kostengünstiger Herstellung und Montage einen kompakten Antrieb mit hoher Leistungsdichte und flexiblen Einsatzmöglichkeiten für unterschiedlichen Karusselltürvarianten umfasst.

Die Lösung der Aufgabe erfolgt durch die Merkmale des unabhängigen Anspruchs. Die abhängigen Ansprüche haben vorteilhafte Ausgestaltungen der Erfindung zum Gegenstand.

Somit wird die Aufgabe gelöst durch eine Karusselltür umfassend ein Drehkreuz mit zumindest zwei Türflügeln, wobei das Drehkreuz um eine Drehachse drehbar ist, wobei entlang der Drehachse eine Axialrichtung und senkrecht zur Axialrichtung eine Radialrichtung definiert sind, einen elektrischen Antrieb, ausgebildet als elektronisch kommutierter Vielpolmotor mit einem Stator und einem Rotor, und ein axiales Gleitlager zwischen Stator und Rotor, mit einer ringförmigen Gleitfläche, die einen Gleitflächeninnendurchmesser und eine Gleitflächenbreite aufweist. Der Stator umfasst ein Statorblechpaket und mehrere Spulen. Der Rotor umfasst ein Rotorblechpaket und mehrere Permanentmagneten. Der Rotor ist koaxial zur Drehachse angeordnet, und mit dem Drehkreuz zum direkten, getriebelosen Antrieb verbunden.

Zwischen dem Stator und dem Rotor befindet sich das axiale Gleitlager (auch: Axiallager). Das axiale Gleitlager weist eine ringförmige Gleitfläche auf. Die Gleitfläche ist entweder fest mit der Rotorscheibe oder fest mit der Statorscheibe verbunden, wobei in der bevorzugten Variante die Gleitfläche fest mit dem Stator verbunden ist und sich am Rotor eine, insbesondere metallene, Gegenfläche befindet. Die ringförmige Gleitfläche erstreckt sich in Radial- und Umfangsrichtung. An der ringförmigen Gleitfläche sind ein Gleitflächeninnendurchmesser P und eine Gleitflächenbreite Q definiert. Im Rahmen der Erfindung wir selbstverständlich die tatsächlich aktive Gleitfläche betrachtet und beschrieben. Diese "tatsächlich aktive Gleitfläche" ist diejenige Fläche, welche von der entsprechenden Gegenfläche überdeckt wird und im gleitenden Kontakt mit der Gegenfläche steht. Es wurde erkannt, dass ein Gleitlager im Antrieb bei kostengünstiger Herstellung einen kompakten Aufbau und einen wartungsarmen Betrieb ermöglicht. Ferner wurde erkannt, dass durch einen elektronisch kommutierten Vielpolmotor ein sehr kompakter und wartungsarmer Antrieb für eine Karusselltür möglich ist. Die entsprechend hohe Leistungsdichte des Antriebs wird erreicht durch die Verwendung von Blechpaketen für den Stator und für den Rotor.

Im Folgenden werden einige Begriffe zur erfindungsgemäßen Karusselltür definiert: Das Drehkreuz einer Karusselltür umfasst üblicherweise mehrere Türflügel, die sternförmig zur Drehachse angeordnet sind. Der Drehkreuzdurchmesser A ist dabei der größte Durchmesser des Kreises, den diese Türflügel beim Drehen des Drehkreuzes überstreichen. Entlang der Drehachse ist die Axialrichtung der Karusselltür definiert. Senkrecht zu dieser Axialrichtung steht die Radialrichtung. Um die Axialrichtung ist die Umfangsrichtung definiert.

Der Antrieb, ausgebildet als Vielpolmotor, weist einen Stator mit einer gewissen Spulenanzahl F auf. Der Statordurchmesser M wird bis zum radial äußeren Ende des Statorblechpaketes gemessen. Der Rotor umfasst ein Rotorblechpaket, das auf einer Rotorscheibe montiert ist. Ebenso umfasst der Stator eine Statorscheibe, wobei auf der Statorscheibe ein Statorblechpaket montiert ist. Die Statorscheibe kann aus mehreren Scheibenblechen zusammengesetzt sein. Die Statorscheibe und die Rotorscheibe liegen gegenüber, so dass zwischen den beiden Scheiben die Statorblechpakete und die Rotorblechpakete angeordnet sind.

Im Rotor sind radial innen am Rotorblechpaket mehrere Permanentmagneten angeordnet. Der Rotordurchmesser B ist bis zu dem radial äußeren Ende des Rotorblechpaketes definiert. Eine Antriebshöhe C des elektrischen Antriebes wird in Axialrichtung von einer äußeren Seite der Statorscheibe bis zu einer äußeren Seite der Rotorscheibe gemessen.

Das Statorblechpaket umfasst bevorzugt einen geschlossenen Ring, an dem in Radialrichtung mehrere Zähne ausgebildet sind. Dabei ist das Statorblechpaket bevorzugt aus mehreren gestapelten Statorringen zusammengesetzt. Die einzelnen Statorringe sind in Axialrichtung übereinander gestapelt. Auf die Zähne des Statorblechpaketes wird jeweils eine Spule aufgesteckt. Die einzelnen Statorringe bilden sowohl einen Teil der Zähne als auch einen Teil des geschlossenen Rings. Die Zähne bilden dabei den Eisenkern der aufgesteckten Spulen und dienen gleichzeitig zur Positionierung und Fixierung der Spulen im Stator. Der einzelne Statorring kann in mehrere Statorsegmente unterteilt werden. In Umfangsrichtung werden die Statorsegmente aneinander gesetzt, so dass beispielsweise drei, vier oder fünf Statorsegmente einen Statorring bilden.

Das Rotorblechpaket ist bevorzugt als geschlossener Ring gestaltet, an dessen radialer Innenseite die Permanentmagneten angeordnet sind. Dabei ist das Rotorblechpaket bevorzugt aus mehreren gestapelten Rotorringen zusammengesetzt. Die einzelnen Rotorringe sind in Axialrichtung übereinander gestapelt. Der einzelne Rotorring ist bevorzugt in mehrere Rotorsegmente unterteilt. In Umfangsrichtung werden die Rotorsegmente aneinander gesetzt, so dass beispielsweise drei, vier oder fünf Rotorsegmente einen Rotorring bilden.

Bevorzugt ist vorgesehen, dass der Gleitflächeninnendurchmesser P zumindest 40mm, vorzugsweise zumindest 45mm, besonders vorzugsweise zumindest 50mm, beträgt, und der Gleitflächeninnendurchmesser P höchstens 100mm, vorzugsweise höchsten 90mm, besonders vorzugsweise höchsten 80mm, beträgt.

Zusätzlich oder alternativ ist bevorzugt vorgesehen, dass die Gleitflächenbreite Q zumindest 1,5mm, vorzugsweise zumindest 2mm, besonders vorzugsweise zumindest 2,5mm, beträgt, und die Gleitflächenbreite Q höchstens 10mm, vorzugsweise höchsten 8mm, besonders vorzugsweise höchsten 6mm, beträgt.

Üblicherweise würde man davon ausgehen, dass der Gleitflächeninnendurchmesser P möglichst groß gewählt sein muss, um ein Kippen des Rotors gegenüber dem Stator weitestgehend zu vermeiden. Des Weiteren würde man üblicherweise davon ausgehen, dass die Gleitflächenbreite Q besonders groß sein sollte, um die entsprechenden Kräfte aufzunehmen. Allerdings muss beachtet werden, dass, je größer der Gleitflächeninnendurchmesser ist, desto größer ist auch die Tangentialgeschwindigkeit an der Gleitfläche. Dadurch erhöht sich die Wärmeentwicklung auf der Gleitfläche, was insbesondere Gleitflächen aus Kunststoff negativ beeinflusst. Eine zu breite Gleitfläche führt zu einer zu großen Reibung, was sich ebenfalls negativ auf die Wärmeentwicklung auswirkt. So muss für das axiale Gleitlager das richtige Maß für den Gleitflächeninnendurchmesser P und die Gleitflächenbreite Q gewählt werden, um bei kostengünstigem Aufbau des Gleitlagers einen geringen Verschleiß und somit einen geringen Energieverbrauch und lange bzw. keine Wartungsintervalle für den Antrieb der Karusselltür zu erreichen. Deshalb sind für den Gleitflächeninnendurchmesser P sowie für die Gleitflächenbreite Q entsprechende, berechnet und im Versuch ermittelte Werte vorgesehen.

Bevorzugt ist ein Verhältnis A/P des Drehkreuzdurchmesser A zum Gleitflächeninnendurchmessers P vorgesehen, wobei das Verhältnis (A/P) zumindest 20, vorzugsweise zumindest 23, besonders vorzugsweise zumindest 25, beträgt, und wobei das Verhältnis A/P höchstens 80, vorzugsweise höchsten 70, besonders vorzugsweise höchsten 65, beträgt.

Wie oben beschrieben ist der Gleitflächeninnendurchmesser P entscheidend für das Kippverhalten zwischen Rotor und Stator. Je größer der Gleitflächeninnendurchmesser P gewählt wird, desto einfacher ist es, ein Kippen zu vermeiden. Allerding führt ein großer Gleitflächeninnendurchmesser P zu erhöhter Reibung und somit zu erhöhter Wärmeentwicklung und Abnutzung. Ferner wird bei dem Verhältnis A/P berücksichtigt, dass der Drehkreuzdurchmesser A wesentlich die Masse der Türe und somit die Größe des Antriebs bestimmt. Mit steigendem Drehkreuzdurchmesser A steigen tendenziell auch die abzustützenden Kräfte, wodurch ein größerer Gleitflächeninnendurchmesser P nötig wird. Diese Zielkonflikte bestimmen somit ein Verhältnis A/P, wobei die angegebenen Zahlenwerte einen guten Kompromiss für die Auslegung des Gleitlagers angeben.

Bevorzugt ist ein Gleitlagerkoeffizient R vorgesehen, wobei gilt 10000(P+Q)*Q=R*(A^2)/4. Der Gleitlagerkoeffizient R beträgt zumindest 0,1, vorzugsweise zumindest 0,5, besonders vorzugsweise zumindest 1, und höchstens 10, vorzugsweise höchsten 8, besonders vorzugsweise höchsten 5.

Für die Größe der ringförmigen Gleitfläche muss beachtet werden, dass die zulässige Flächenpressung nicht überschritten wird. In der Karusselltüre befindet sich der Stator über dem Rotor. Über dem Stator wiederum befindet sich die Deckenkonstruktion der Karusselltür oder eine übergeordnete Struktur. Über diese Deckenkonstruktion oder übergeordnete Struktur wirkt eine Gewichtskraft auf den Stator. Diese Gewichtskraft ist in erster Linie abhängig von dem Drehkreuzdurchmesser A. Je größer der Drehkreuzdurchmesser A ist, desto größer ist auch die Deckenkonstruktion und desto größer ist beispielsweise auch die Schneelast. Insofern ist der Drehkreuzdurchmesser A ausschlaggebend für die Flächenpressung der axialen Gleitfläche. Für einen geringen Verschleiß, einen geringen Energieverbrauch und entsprechend große Wartungsintervalle ist jedoch ein kleiner Gleitlagerinnendurchmesser P und eine geringe Gleitlagerbreite Q erforderlich. Für die Auslegung der Gleitfläche des axialen Gleitlagers hat sich folgende Formel als vorteilhaft erwiesen: 10000(P+Q)*Q=R*(A^2)/4 mit Gleitlagerkoeffizienten R. In dieser Formel wird für eine überschlägige Auslegung der Gleitfläche beachtet, dass der Drehkreuzdurchmesser A ausschlaggebend ist für die Größe der Konstruktion über dem Stator und somit für die Last auf dem Stator, welche wiederum über das Gleitlager übertragen wird. Gleichzeitig wird beachtet, dass der Gleitlagerinnendurchmesser P sowie die Gleitlagerbreite Q entscheidend sind für die maximale Flächenpressung, geringe Wärmeentwicklung und geringe Reibung.

Bevorzugt ist ein einstückiges Lagerbauteil aus Kunststoff vorgesehen an dem die ringförmige Gleitfläche des axialen Gleitlagers und eine weitere Gleitfläche eines radialen Gleitlagers ausgebildet sind. Das einstückige Lagerbauteil ist entweder mit der Statorscheibe oder der Rotorscheibe fest verbunden. In der bevorzugten Variante wird das Lagerbauteil mit dem Stator verbunden. An dem einstückigen Lagerbauteil ist die beschriebene ringförmige Gleitfläche des axialen Gleitlagers ausgebildet. Des Weiteren weist das Lagerbauteil auch eine Gleitfläche eines radialen Gleitlagers auf. So kann durch einfache und kostengünstige Herstellung mit dem einstückigen Lagerbauteil sowohl die Gleitfläche des axialen Gleitlagers als auch des radialen Gleitlagers gebildet werden.

Für eine einfache Montage und für eine direkte Kraftübertragung ist bevorzugt vorgesehen, dass das Drehkreuz direkt am Rotor befestigt wird. Insbesondere wird dabei das Drehkreuz direkt an der Rotorscheibe befestigt. Dabei können insbesondere auch die einzelnen Türflügel direkt am Rotor befestigt werden. Der Rotor weist, im Gegensatz zu einer üblichen Welle zur Kraftübertragung, einen relativ großen Durchmesser auf. Dieser große Durchmesser kann vorteilhaft zur Kraftübertragung auf das Drehkreuz genutzt werden. Bis zu der radial äußersten Verbindungsstelle zwischen Rotor und Drehkreuz ist der Kraftübertragungsdurchmesser S definiert. Je größer dieser Kraftübertragungsdurchmesser S gewählt wird, desto optimaler kann die Kraftübertragung zwischen Rotor und Drehkreuz erfolgen. Aufgrund des günstigen Hebelverhältnisses sind die auf die Kraftübertragungselemente wirkenden Kräfte gering. Somit können die Übertragungselemente günstiger, einfach und weniger robust dimensioniert werden. Allerdings muss beachtet werden, dass, je größer der Rotordurchmesser B ist, desto größer ist auch der Kraftübertragungsdurchmesser S. Jedoch ist auch eine gewisse Begrenzung des Rotordurchmessers B wünschenswert, um den Antrieb möglichst klein zu bauen und somit möglichst viel gestalterischen Freiraum offen zu halten.

Wenn eine direkte Anbindung des Drehkreuzes an dem Rotor erfolgt, so sollte auch möglichst viel des Rotordurchmessers B genutzt werden für die Kraftübertragung. Der Kraftübertragungsdurchmesser beträgt deshalb zumindest 30%, vorzugsweise zumindest 50%, des Rotordurchmesser B. Je nach Ausführungsform der Kraftübertragungselemente kann der Kraftübertragungsdurchmesser auch 100% des Rotordurchmessers B betragen.

Bevorzugt ist ein Verhältnis S/A des Kraftübertragungsdurchmessers S zum Drehkreuzdurchmesser A vorgesehen, wobei das Verhältnis S/A zumindest 0,04, vorzugsweise zumindest 0,06, besonders vorzugsweise zumindest 0,08, beträgt, und wobei das Verhältnis S/A höchstens 0,6, vorzugsweise höchsten 0,4, besonders vorzugsweise höchsten 0,3, beträgt.

Wie bereits beschrieben, führt ein großer Rotordurchmesser B und somit ein großer Kraftübertragungsdurchmesser S zu einer optimalen Kraftübertragung zwischen Rotor und Drehkreuz. Allerdings soll gleichzeitig das Ziel eines möglichst kleinbauenden Antriebs erreicht werden, um die gestalterischen Freiheiten offen zu halten. Deshalb ist bevorzugt das Verhältnis S/A des Kraftübertragungsdurchmessers S zum Drehkreuzdurchmesser A anzusetzen.

Alternativ zur direkten Verbindung zwischen Drehkreuz und Rotor ist bevorzugt vorgesehen, dass an der Rotorscheibe ein Antriebselement angeordnet wird. Dieses Antriebselement ist beispielsweise eine koaxial angeordnete Antriebswelle. Über diese Antriebswelle kann die Antriebskraft beispielsweise über eine Verzahnung auf das Drehkreuz übertragen werden. Das Antriebselement ist vorteilhafterweise von der Oberseite des Antriebs durchsteckbar. Daraus ergibt sich der Vorteil einer verbesserten Montage- und Demontage-Reihenfolge, wobei ein Motortausch ohne Demontage des Drehkreuzes möglich ist. Ein weiterer Vorteil des Antriebselementes ist, dass der erfindungsgemäß beschriebene Antrieb auch in Verwendung mit bereits bestehenden Drehkreuzen angewandt werden kann, da diese Drehkreuze üblicherweise einen Anschluss für solch ein Antriebselement aufweisen.

Bevorzugt ist an der dem Drehkreuz zugewandten Außenseite des Rotors ein das Antriebselement umgebendes elastisches Ausgleichelement angeordnet , wobei eine axiale Last über das Ausgleichselement auf dem Drehkreuz abstützbar ist. Das elastische Ausgleichselement ist nicht an der Drehmomentübertragung beteiligt. Über das elastische Element wird die axiale Last der Decke/Schneelast auf das Drehkreuz übertragen. Bei einer Schiefstellung des Antriebs oder des Drehkreuzes wird diese durch das elastische Ausgleichselement ausgeglichen. Somit wird eine Schiefstellung des Rotors weitestgehend vermieden. Der Stator umfasst zumindest eine Anlauffläche, vorzugsweise aus Kunststoff, wobei die Anlauffläche radial außerhalb des halben Statordurchmessers M ausgebildet ist, wobei die Anlauffläche im normalen Betrieb vom Rotor beabstandet ist, und wobei bei einem Kippen des Rotors der Rotor an der Anlauffläche anliegt.

Die Lagerung zwischen Stator und Rotor ist bevorzugt relativ nah an der Drehachse vorgesehen. Dadurch kann ein beschriebene kleine Gleitlager verwendet werden. Somit ist das Lager kostengünstig, wartungsarm und betriebssicher gestaltet. Durch diese Positionierung des Lagers relativ weit in der Mitte, kann jedoch ein Kippen des Rotors gegenüber dem Stator nicht in allen Zuständen vermieden werden. Beispielsweise bei der Montage des Antriebs an einer übergeordneten tragenden Struktur oder bei der Montage des Drehkreuzes am Antrieb kann es zu solch einem Kippen kommen. Um das Kippen zu begrenzen, ist am Stator eine Anlauffläche vorgesehen. Diese Anlauffläche ist vorteilhafterweise aus Kunststoff gebildet. Die Anlauffläche befindet sich radial außerhalb des halben Statordurchmessers M. Im normalen Betrieb des Antriebes ist der Rotor von der Anlauffläche beabstandet und lediglich bei einem Kippen des Rotors gegenüber dem Stator liegt der Rotor an der Anlauffläche an. Die zumindest eine Anlauffläche ist an Spulenkörpern ausgebildet, wobei auf den Spulenkörpern die Drähte der einzelnen Spulen gewickelt sind, und/oder die Anlauffläche ist an zumindest einem Drahtführungselement ausgebildet, wobei der Stator radial innerhalb der Spulen zumindest ein Drahtführungselement in Ringform oder mehrere Drahtführungselement in Segmentform aufweist, wobei an dem zumindest einem Drahtführungselement die Drähte der Spulen geführt und/oder befestigt sind.

Vorzugsweise weist der Stator radial innerhalb der Spulen zumindest ein Drahtführungselement auf. Das Drahtführungselement weist eine elektrisch nicht leitende Oberfläche auf und ist bevorzugt aus Kunststoff gefertigt. Es wird entweder ein Drahtführungselement in Ringform verwendet, oder es werden mehrere Drahtführungselemente in Segmentform aneinandergesetzt. An dem zumindest einen Drahtführungselement werden die Drähte zwischen den Spulen geführt und/oder befestigt. Dadurch wird sichergestellt, dass sich die Drähte in einer bestimmten Position befinden und nicht etwa abstehen und am Rotor schleifen. Die zumindest eine Anlauffläche wird an den Spulenkörpern und/oder an dem zumindest einen Drahtführungselement ausgebildet. So können diese aus Kunststoff gefertigten Bauteile gleichzeitig auch für die Anlauffläche genutzt werden. Vorzugsweise werden eine Vielzahl an Anlaufflächen durch sich in Axialrichtung erstreckende Dome gebildet. Diese Dome sind dabei insbesondere integraler Bestandteil der Spulenkörper bzw. des zumindest einen Drahtführungselementes.

Nachfolgend wird die Erfindung anhand der begleitenden Zeichnungen im Detail erläutert. Dabei zeigen:
- Fig. 1: eine erfindungsgemäße Karusselltür gemäß einem Ausführungsbeispiel,
- Fig. 2: eine Schnittansicht des Antriebs der erfindungsgemäßen Karusselltür,
- Fig. 3: ein Detail zu Fig. 2,
- Fig. 4: den Stator des Antriebs,
- Fig. 5: ein Statorsegment des Antriebs,
- Fig. 6: einen teilweise montierten Stator,
- Fig. 7: den Rotor des Antriebs,
- Fig. 8: ein Rotorsegment,
- Fig. 9: eine Detailansicht des Rotors,
- Fig. 10: einen teilweise montierten Rotor,
- Fig. 11: ein Detail des Stators,
- Fig. 12: eine Spulenkette des Stators,
- Fig. 13: einen Spulenkörper für die Spulen des Stators,
- Fig. 14: ein Detail des Antriebs gemäß einer ersten Variante,
- Fig. 15: ein Detail des Antriebs gemäß einer zweiten Variante,
- Fig. 16: ein Detail des Antriebs mit Anschlusssteckern,
- Fig. 17: zwei Ansichten einer Lagerung im Antrieb, und
- Fig. 18: eine Variante des Antriebs zur direkten Montage der Türflügel.

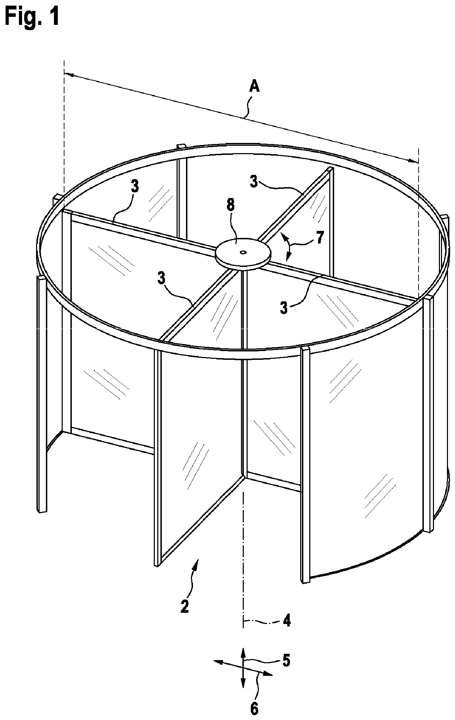

Im Folgenden wird anhand der Fig. 1 bis 18 ein Ausführungsbeispiel einer erfindungsgemäßen Karusselltür 1 gemäß vorliegender Erfindung erläutert.

Fig. 1 zeigt eine isometrische Ansicht der Karusselltür 1. Die Karusselltür 1 umfasst ein Drehkreuz 2. Dieses Drehkreuz 2 weist vier Türflügel 3 auf. Die Türflügel 3 sind jeweils um 90° zueinander abgewinkelt. Das Drehkreuz 2 ist um eine Drehachse 4 drehbar angeordnet. Die Drehachse 4 streckt sich in Axialrichtung 5. Senkrecht zur Axialrichtung 5 ist eine Radialrichtung 6 definiert. Um die Axialrichtung 5 ist eine Umfangsrichtung 7 definiert.

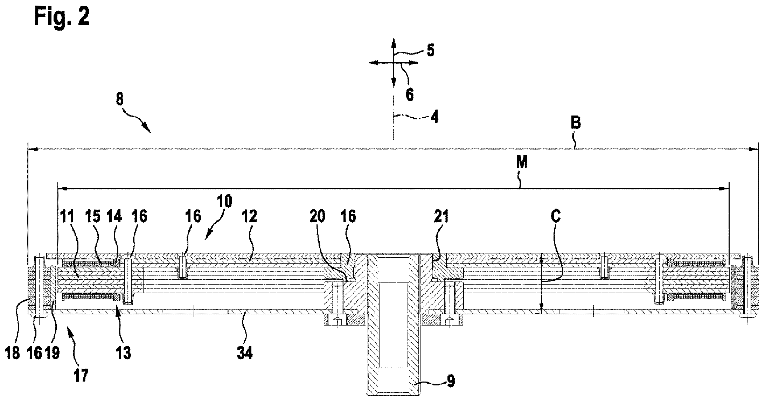

Auf dem Drehkreuz 2 ist ein Antrieb 8 angeordnet. Dieser Antrieb 8 ist als elektronisch kommutierter Vielpolmotor ausgebildet. Der Rotor 17 (s. Fig. 2 ff.) dieses Antriebs 8 ist koaxial zur Drehachse 4 mit dem Drehkreuz 2 verbunden. Dadurch ermöglicht der Antrieb 8 einen direkten und getriebelosen Antrieb des Drehkreuzes 2.

Gemäß Fig. 1 weist das Drehkreuz 2 mit seinen Türflügeln 3 einen größten Drehkreuzdurchmesser A auf. Der Durchmesser A ist in Radialrichtung 6, also senkrecht zur Axialrichtung 5, definiert.

Fig. 2 zeigt einen Schnitt durch den Antrieb 8. Der Antrieb 8 umfasst einen Stator 10 und den Rotor 17. Wie Fig. 1 zeigt, ist der Antrieb 8 über dem Drehkreuz 2 angeordnet. Dabei befindet sich der Rotor 17 zwischen dem Drehkreuz 2 und dem Stator 10. Entgegen der gezeigten Ausführungsform kann der Antrieb 8 auch unter dem Drehkreuz 2 angeordnet werden, wobei dann ebenfalls der Rotor 17 zwischen Stator 10 und Drehkreuz 2 angeordnet wird.

Fig. 2 zeigt ein drehfest mit dem Rotor 17 verbundenes Abtriebselement 9. Über dieses Abtriebselement 9 ist das Drehkreuz 2 drehfest mit dem Rotor 17 verbunden. Dieses Abtriebselement 9 dient insbesondere zur drehfesten Verbindung von herkömmlichen Drehkreuzen 2 mit dem erfindungsgemäßen Antrieb 8. Bei einer speziellen Konstruktion des Drehkreuzes 2 für den gezeigten Antrieb 8, kann das Drehkreuz 2, insbesondere die einzelnen Türflügel 3, auch direkt mit dem Rotor 17, ohne separatem Abtriebselement 9 verbunden werden.

Der Stator 10 umfasst eine Statorscheibe 12. Am äußeren Umfang der Statorscheibe 12 ist ein Statorblechpaket 11 angeordnet. Auf diesem Statorblechpaket 11 stecken die einzelnen Spulen 13 des Stators 10.

Jede Spule umfasst einen Spulenkörper 14, beispielsweise aus Kunststoff. Auf diesem Spulenkörper 14 befinden sich die Wicklungen 15 der einzelnen Spule 13.

Über Verbindungselemente 16, hier ausgebildet als Schließringbolzensysteme, ist das Statorblechpaket 11 mit der Statorscheibe 12 verbunden.

Der Rotor 17 umfasst eine Rotorscheibe 34. Diese Rotorscheibe 34 liegt der Statorscheibe 12 gegenüber. Zwischen den beiden Scheiben 34, 12 ist das Statorblechpaket mit den Spulen 13 angeordnet.

Am äußeren Umfang der Rotorscheibe 34 ist ein Rotorblechpaket 18 angeordnet. Dieses Rotorblechpaket 18 ist über Verbindungselemente 16 in Form von Schließringbolzensystemen mit der Rotorscheibe 34 verbunden.

Radial innerhalb des Rotorblechpaketes 18 sind auf dem Rotorblechpaket 18 mehrere Permanentmagneten 19 angeordnet.

Im Bereich der Drehachse 4 sind zwischen der Statorscheibe 12 und der Rotorscheibe 34 ein Axiallager 20 und ein Radiallager 21 ausgebildet. Im gezeigten Ausführungsbeispiel sind das Axiallager 20 und das Radiallager 21 als Gleitlager ausgebildet.

Ferner zeigt Fig. 2 einen größten Rotordurchmesser B senkrecht zur Axialrichtung 5 sowie einen größten Statordurchmesser M, ebenfalls senkrecht zur Axialrichtung 5. Der Statordurchmesser M ist dabei bis zu den äußeren Enden des Statorblechpaketes 11 definiert.

Fig. 2 zeigt für den Antrieb 8, dass aufgrund der Verwendung des Statorblechpaketes 11 und des Rotorblechpaketes 18 eine sehr hohe Leistungsdichte für den Antrieb 8 möglich ist. Dadurch kann der Antrieb relativ klein konstruiert werden. Dies bezieht sich sowohl auf den Rotordurchmesser B als auch auf eine Antriebshöhe C, welche in Axialrichtung 5 definiert ist.

Wie in Zusammenschau mit Fig. 1 zu erkennen ist, ermöglicht der Antrieb 8 mit relativ kleinem Rotordurchmesser B größtmögliche Gestaltungsfreiheit für die Deckenkonstruktion über der Karusselltür 1. Der Großteil des Deckenbereiches über der Karusselltür 1 kann absolut frei, beispielsweise transparent mit Glasscheiben gestaltet werden. Lediglich eine kleine Fläche ist hier durch den Antrieb 8 bedeckt.

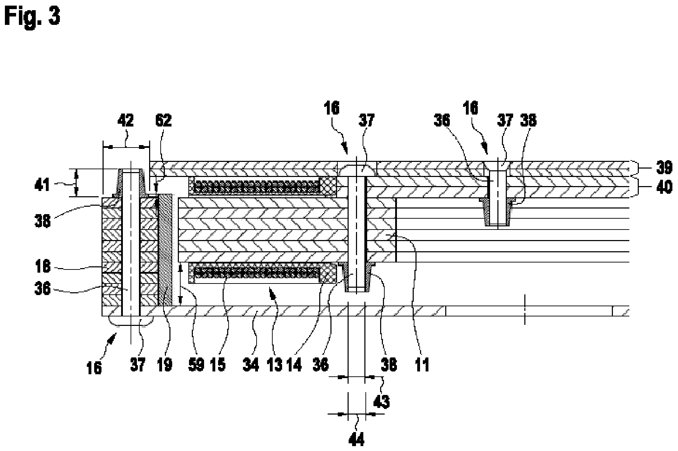

Fig. 3 zeigt einen Detailausschnitt zu Fig. 1. In dieser Darstellung ist die genaue Ausgestaltung der Verbindungselemente 16 als Schließringbolzensystem zu sehen.

Für die Verbindungselemente 16 werden Bolzen 36 verwendet. Die Bolzen 36 weisen Köpfe 37 auf. Die Köpfe 37 sind entweder linsenförmig oder als Senkköpfe ausgebildet. An den den Köpfen 37 gegenüberliegenden Enden der Bolzen 36 werden Schließringe 38 aufgepresst. Bevor diese Schließringe 38 aufgepresst werden, werden die Bolzen 36 in Axialrichtung 5 vorgespannt.

Wie Fig. 3 zeigt, ist die Statorscheibe 12 aus einzelnen Scheibenblechen 39, 40 zusammengesetzt. Die Verbindungselemente 16 werden nicht nur zur Verbindung der Blechpakete (Statorblechpaket 11 und Rotorblechpaket 18) untereinander, sondern auch zur Verbindung der Blechpakete mit der Statorscheibe 12 bzw. der Rotorscheibe 34 verwendet, als auch zur Verbindung der einzelnen Scheibenbleche 39, 40.

Fig. 3 zeigt ferner einen Bolzendurchmesser 43 der Bolzen 36 sowie einen Verbindungslochdurchmesser 44 der Verbindungslöcher 27, in denen die Bolzen 36 stecken. Der Verbindungslochdurchmesser 44 ist etwas größer gewählt als der Bolzendurchmesser 43. Es ist zu beachten, dass das Schließringbolzensystem den Vorteil hat, dass die Bolzen 36 in Axialrichtung vorgespannt werden und die Verbindungslöcher 27 nicht ausfüllen. Es verbleibt also bei der Montage ein gewisses Spiel zum Verschieben der einzelnen Bleche untereinander.

Fig. 3 zeigt ferner einen begrenzten axialen Bauraum 41 und einen radialen Bauraum 42 der hier für die Schließringe 38 zur Verfügung steht. Die Permanentmagneten 19 ragen mit einem ersten Überstand 59 weiter in Axialrichtung 5 als das Statorblechpaket 11. Auf der gegenüberliegenden Seite stehen die Permanentmagneten 19 mit einem zweiten Überstand 62 über das Rotorblechpaket 18 über.

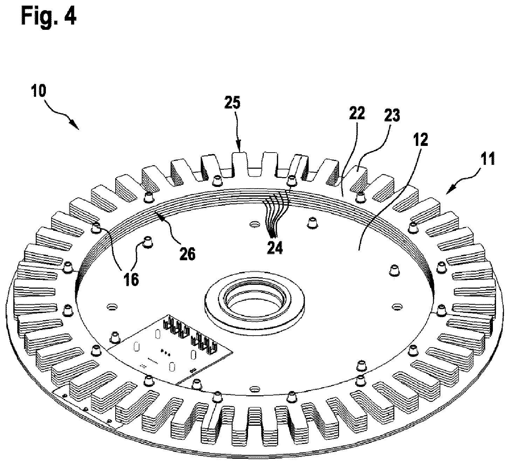

Fig. 4 zeigt den Stator 10 ohne den aufgesteckten Spulen 13. Gemäß Fig. 4 umfasst das Statorblechpaket 11 einen geschlossenen Ring 22, von dem in Radialrichtung 6 nach außen mehrere Zähne 23 abstehen. Auf diese Zähne 23 werden die Spulenkörper 14 aufgesteckt.

Das Statorblechpaket 11 ist zusammengesetzt aus mehreren, übereinandergestapelten Statorringen 24. Der einzelne Statorring 24 wiederum ist zusammengesetzt aus beispielsweise vier Statorsegmenten 25.

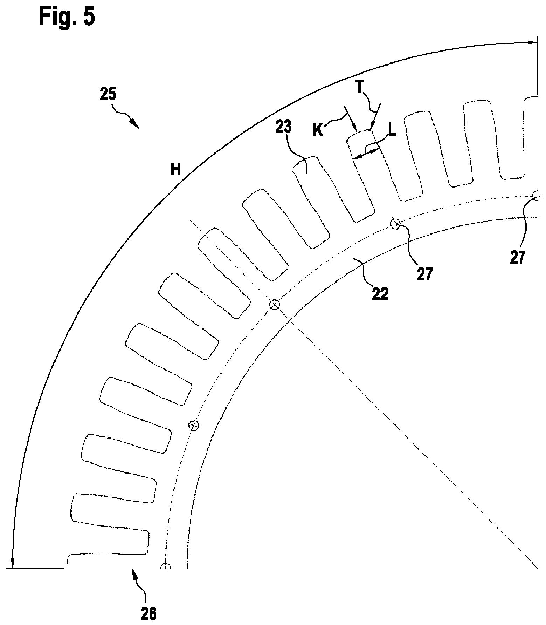

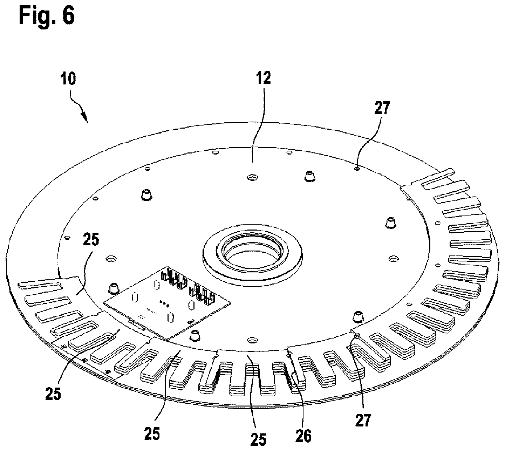

Fig. 5 zeigt im Detail eines der Statorsegmente 25. Fig. 6 zeigt, wie die einzelnen Statorsegmente 25 versetzt zueinander angeordnet werden. Jeweils zwischen zwei Statorsegmenten 25 entsteht ein Stoß 26. In den Statorsegmenten 25 sind Verbindungslöcher 27 vorgesehen. Durch diese Verbindungslöcher 27 werden die Bolzen 36 der Verbindungselemente 16 gesteckt.

Fig. 5 zeigt den Segmentwinkel H, den Kopfradius K des einzelnen Zahns 23, den Eckenradius T des einzelnen Zahns 23 sowie die Zahnbreite L des einzelnen Zahns 23.

Der Kopfradius K und der Eckenradius T werden entsprechend ausgebildet, um möglichst wenig Rastmoment zu erzeugen. Die Zahnbreite L ist in der Mitte des Zahns 23 etwas vergrößert. Dadurch klemmen die aufgesteckten Spulenkörper 14 auf den Zähnen 23.

Wie insbesondere Fig. 6 zeigt, liegen die Stöße 26 in der Mitte des einzelnen Zahns 23. Des Weiteren werden die Statorsegmente 25 versetzt zueinander angeordnet, so dass die Stöße 26 der einzelnen Statorringe 24 sich nicht überlappen. Dies hat entsprechend positive Auswirkungen auf den magnetischen Fluss im Statorblechpaket 11.

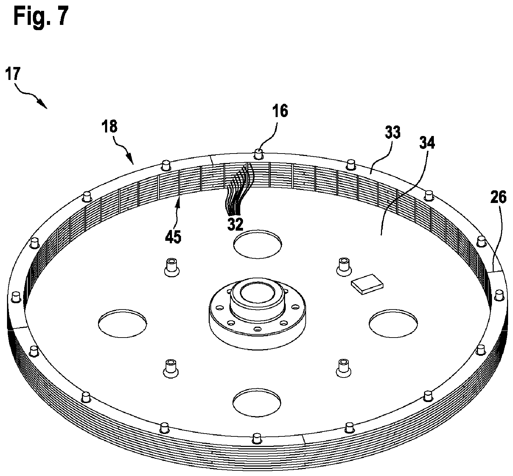

Fig. 7 zeigt im Detail den Rotor 17 ohne den Permanentmagneten 19. Das Rotorblechpaket 18 ist, ähnlich wie das Statorblechpaket 11, zusammengesetzt aus übereinandergestapelten Rotorringen 32. Die einzelnen Rotorringe 32 wiederum sind aus Rotorsegmenten 33 zusammengesetzt. Zwischen den Rotorsegmenten 33 entstehen Stöße 26. In den Rotorsegmenten 33 sind entsprechende Verbindungslöcher 27 vorgesehen. Durch diese Verbindungslöcher 27 werden die Bolzen 36 (s. Fig. 3) gesteckt.

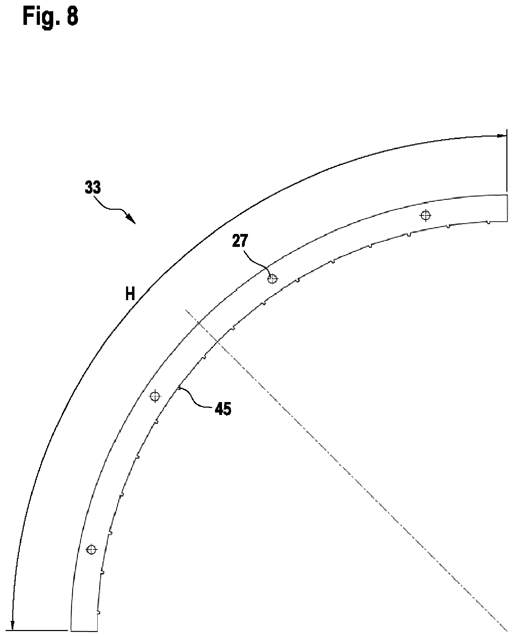

Fig. 8 zeigt im Detail ein einzelnes Rotorsegment 33 mit dessen Segmentwinkel H.

Radial innen an den Rotorsegmenten 33 sind Positionierungsfortsätze 45 ausgebildet. Diese Positionierungsfortsätze 45 sind hier kleine, radial nach innen ragende Nasen.

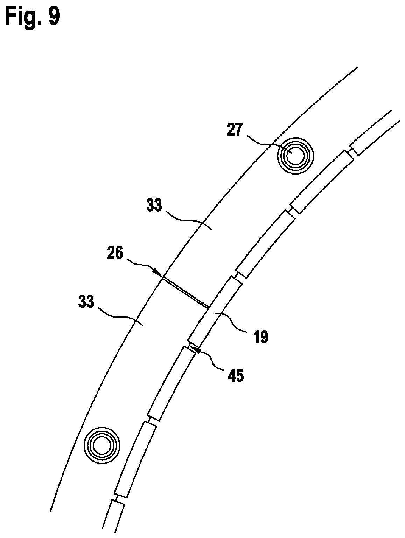

Wie insbesondere die Zusammenschau von Fig. 9 und Fig. 7 zeigt, bilden diese Positionierungsfortsätze 45 im zusammengesetzten Zustand des Rotorblechpaketes 18 kleine Stege zwischen den einzelnen Permanentmagneten 19. Die Positionierungsfortsätze 45 sorgen für den definierten Abstand der einzelnen Permanentmagneten 19 zueinander.

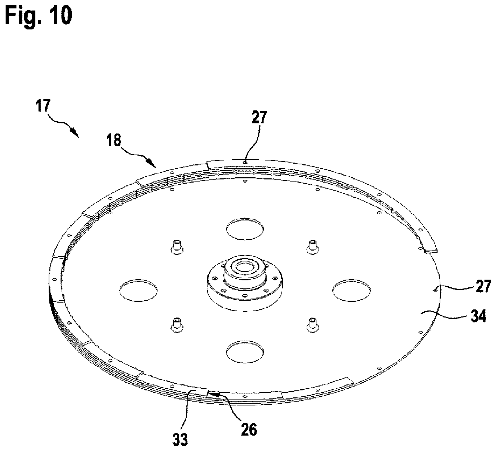

Fig. 10 zeigt einen teilmontierten Zustand des Rotorblechpaketes 18. Ähnlich wie bei dem Statorblechpaket 11 werden auch hier die einzelnen Rotorsegmente 33 versetzt zueinander angeordnet, so dass die Stöße 26 einzelner Rotorringe 32 nicht überlappen. Dies wirkt sich positiv auf den magnetischen Fluss aus.

Der Segmentwinkel H der Statorsegmente 25 und der Rotorsegmente 33 ist geringfügig kleiner als 360°/Segmentanzahl. Die einzelnen Segmente 25, 33 werden in Position gebracht und über die Verbindungselemente 16 fixiert. Dabei ist der Bolzendurchmesser 43 kleiner als der Verbindungslochdurchmesser 44 (s. Fig. 3). Dadurch ist ein gewisses Spiel bei der Montage möglich.

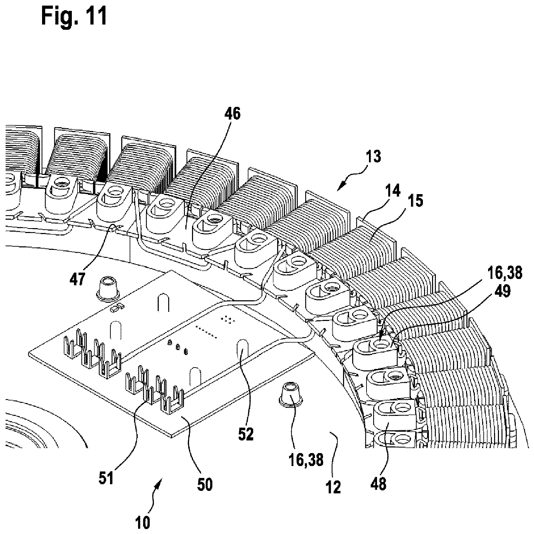

Fig. 11 zeigt ein Detail des Stators 10. Anhand dieser Darstellung ist gut zu erkennen, dass radial innerhalb der einzelnen Spulen 13 sogenannte Drahtführungselemente 46, insbesondere aus Kunststoff, aufgesetzt sind. Diese Drahtführungselemente 46 führen die Drähte zwischen den einzelnen Spulen 13. Hierzu weisen die Drahtführungselemente 46 Schlitze 47 auf, in die die Drähte eingesteckt werden können.

Auf der Statorscheibe 12, in dem Hohlraum zwischen der Statorscheibe 12 und der Rotorscheibe 34, befindet sich eine Leiterplatte 50. Auf dieser Leiterplatte 50 sind Schneidklemmen 51 angeordnet. In diese Schneidklemmen 51 können die Drähte eingesteckt werden. Dabei erfolgt durch die Funktion der Schneidklemmen 51 gleichzeitig ein Abisolieren der Drähte als auch ein Kontaktieren der Drähte. Über Rastverbindungen 52 ist die Leiterplatte 50 mit der Statorscheibe 12 verbunden.

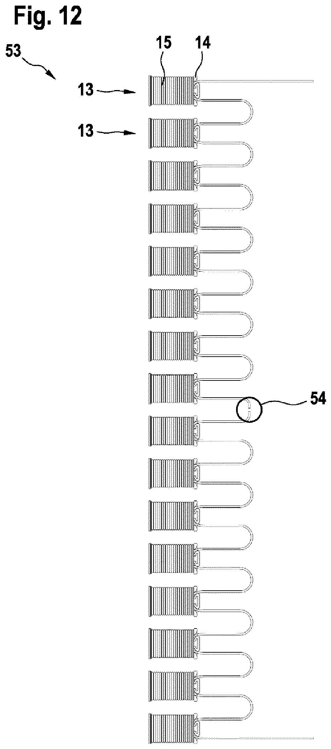

Für eine einfache Herstellung und Montage werden Spulenketten 53 gemäß Fig. 12 verwendet. Die einzelne Spulenkette 53 weist mehrere Spulenkörper 14 auf. Der Draht wird jeweils um einen Spulenkörper 14 gewickelt und führt zum nächsten Spulenkörper 14 und wird wiederum zu einer Spule 13 gewickelt. Dadurch entstehen mehrere zusammenhängende Spulen 13 inkl. Spulenkörper 14. Diese Spulenketten 43 können sehr einfach auf das Statorblechpaket 11 montiert werden. Über gelötete Verbindungstellen 54 können die Drähte mehrere Ketten verbunden werden.

Nach dem Aufstecken der Spulenketten 53 werden die Drähte zwischen den Spulen 13 in die entsprechenden Schlitze 47 der Drahtführungselemente 46 eingesteckt.

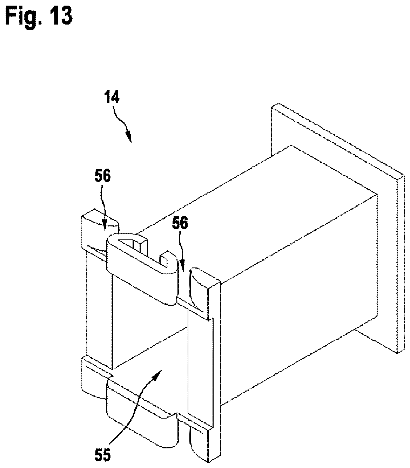

Fig. 13 zeigt im Detail einen der Spulenkörper 14. Im Spulenkörper 14 sind durch entsprechend abgerundete Schlitze Drahtein-/-ausläufe 56 vorgesehen, um den Draht definiert in den gewickelten Zustand überzuführen. Im Inneren der Spulenkörper 14 ist ein entsprechender Hohlraum 55 vorgesehen. In diesen Hohlraum 55 ragt im montierten Zustand ein Zahn 23.

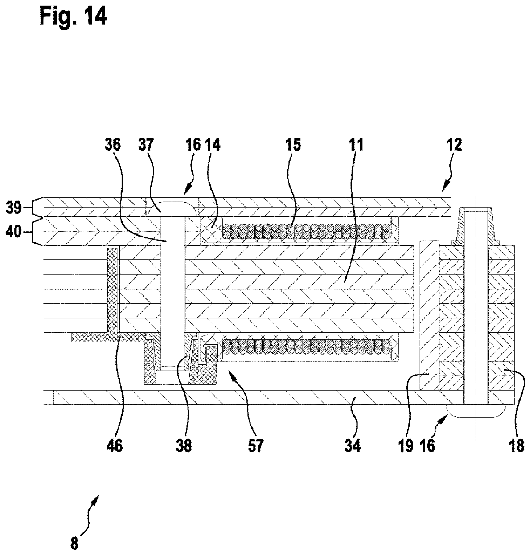

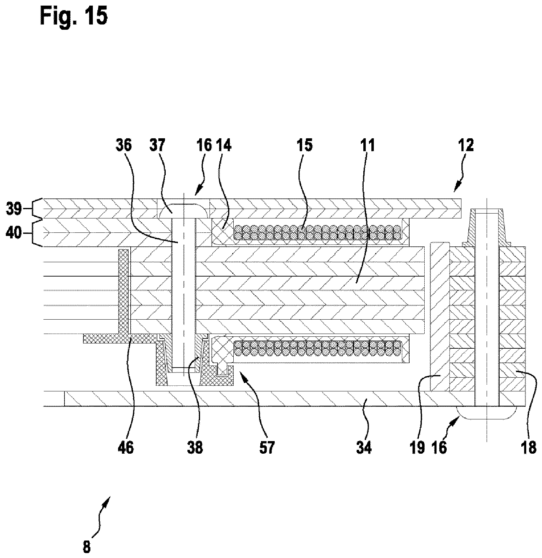

Fig. 14 und 15 zeigen in Schnittansichten zwei mögliche Varianten für die genaue Ausbildung der Drahtführungselemente 46. In beiden Varianten gibt es eine direkte formschlüssige Verbindung 57 zwischen dem Drahtführungselement 46 und dem Spulenkörper 14. Gemäß Fig. 14 ragt ein Fortsatz des Drahtführungselementes 46 in eine entsprechende Nut des Spulenkörpers 14. Gemäß Fig. 15 ragt ein entsprechender Fortsatz des Spulenkörpers 14 in eine Nut des Drahtführungselementes 46.

In beiden Varianten ist eine einfache und schnelle Montage sowie eine gegenseitige Fixierung der Drahtführungselemente 46 und der Spulenkörper 14 möglich.

Ferner zeigen Fig. 14 und 15 eines der Verbindungselemente 16, welches zur Montage des Statorblechpaketes 11 genutzt wird. Diese Verbindungselemente 16 weisen, wie bereits beschrieben, entsprechende Schließringe 38 auf. Diese Schließringe 38 werden hier zur Positionierung und/oder Fixierung der Drahtführungselemente 46 verwendet. Dies erfolgt, indem die Drahtführungselemente 46 auf diese Schließringe 38 aufgesteckt werden.

Ferner zeigt die Zusammenschau auf Fig. 11 mit Fig. 14 und Fig. 15, dass die Drahtführungselemente 46 Dome 48 aufweisen. Diese Dome 48 sind integrale Fortsätze der Drahtführungselemente 46, die sich in Axialrichtung 5 in Richtung der Rotorscheibe 34 erstrecken.

Wie anhand von Fig. 2 gezeigt wurde, befindet sich die axiale und radiale Lagerung zwischen Rotor 17 und Stator 10 relativ weit in der Mitte. Dadurch könnte es zu einem Verkippen des Rotors 17 gegenüber dem Stator 10 kommen. Um dieses Verkippen zu begrenzen, sind die Dome 48 vorgesehen. Die Rotorscheibe 34 kann an diesen Domen 48 bei einem entsprechenden Verkippen aufliegen.

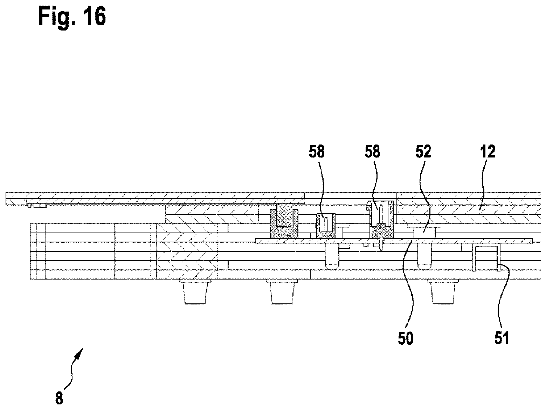

Fig. 16 zeigt im Detail eine Schnittansicht des Antriebs 8. Dieser Schnitt führt durch die in Fig. 11 gezeigte Leiterplatte 50. An der Leiterplatte 50 sind Anschlussstecker 58 ausgebildet. Diese ragen nach oben, also in Richtung der Statorscheibe 12. In der Statorscheibe 12 ist eine entsprechende Aussparung vorgesehen, so dass die Anschlussstecker 58 von oben zugänglich sind. Dabei zeigt Fig. 16 auch, dass die Anschlussstecker 58 nicht über die Statorscheibe 12 hinausragen und somit während des Transports geschützt angeordnet sind. Die beiden Anschlussstecker 58 dienen zur strom- und datenführenden Anbindung des Antriebs 8.

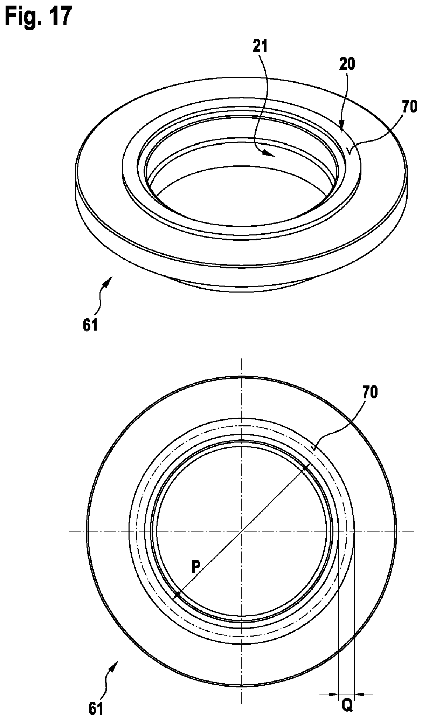

Die Fig. 17 zeigt in zwei Ansichten das Lagerbauteil 61. Die genaue Position des Lagerbauteils 61 zwischen Rotor 17 und Stator 10 zeigt die Darstellung in Fig. 2. Das Lagerbauteil 61 ist vorteilhafterweise ein einstückiges Kunststoffbauteil und stellt die relevanten Flächen für das Axiallager 20 und Radiallager 21 dar. Hier ist von besonderem Interesse die am Lagerbauteil 61 ausgebildete ringförmige Gleitfläche 70 mit dem Gleitflächeninnendurchmesser P und der Gleitflächenbreite Q. Wie bereits beschrieben wurde, gibt es für die genaue Dimensionierung dieser Gleitfläche 70 und somit für die genaue Ausbildung des Axiallagers 20 bevorzugte Größenordnungen für die Gleitflächenbreite Q und den Gleitflächeninnendurchmesser P.

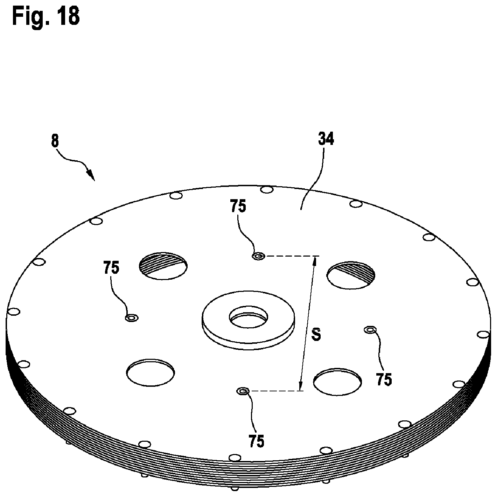

Fig. 18 zeigt eine Variante des Antriebs 8. Hier wird das Drehmoment nicht über das Abtriebselement 9 auf das Drehkreuz 2 übertragen. Vielmehr erfolgt eine direkte Anbindung der Türflügel 3 am Rotor 17 an Kraftübertragungsstellen 75. Diese Kraftübertragungsstellen 75 definieren den beschriebenen Kraftübertragungsdurchmesser S.

### Bezugszeichenliste

- A: Drehkreuzdurchmesser
- B: Rotordurchmesser
- C: Antriebshöhe
- D: Karusselltürrastzahl
- E: Auslegungskoeffizienten
- F: Spulenanzahl
- G: Statorsegmentanzahl
- H: Segmentwinkel
- I: Reduktionswinkel
- K: Kopfradius
- L: Zahnbreite
- M: Statordurchmesser
- N: Rotorsegmentanzahl
- P: Gleitflächeninnendurchmesser
- Q: Gleitflächenbreite
- R: Gleitlagerkoeffizient
- S: Kraftübertragungsdurchmesser
- T: Eckenradius
- U: Magnetanzahl

- 1: Karusselltür
- 2: Drehkreuz
- 3: Türflügel
- 4: Drehachse
- 5: Axialrichtung
- 6: Radialrichtung
- 7: Umfangsrichtung
- 8: Antrieb
- 9: Abtriebselement
- 10: Stator
- 11: Statorblechpaket
- 12: Statorscheibe
- 13: Spulen
- 14: Spulenkörper
- 15: Wicklung
- 16: Verbindungselemente (Schließringbolzensystem)
- 17: Rotor
- 18: Rotorblechpaket
- 19: Permanentmagneten
- 20: Axiallager
- 21: Radiallager
- 22: geschlossener Ring
- 23: Zähne
- 24: Statorring
- 25: Statorsegmente
- 26: Stöße
- 27: Verbindungslöcher
- 32: Rotorringe
- 33: Rotorsegmente
- 34: Rotorscheibe
- 36: Bolzen
- 37: Köpfe
- 38: Schließringe
- 39: erste Scheibenbleche
- 40: zweite Scheibenbleche
- 41: axialer Bauraum
- 42: radialer Bauraum
- 43: Bolzendurchmesser
- 44: Verbindungslochdurchmesser
- 45: Positionierungsfortsätze
- 46: Drahtführungselemente
- 47: Schlitze
- 48: Dome
- 49: Anlaufflächen
- 50: Leiterplatte
- 51: Schneidklemmen
- 52: Rastverbindung
- 53: Spulenkette
- 54: Verbindungstelle (Lötstelle)
- 55: Hohlraum
- 56: Drahtein-/-auslauf
- 57: direkte formschlüssige Verbindung
- 58: Anschlussstecker
- 59: erster Überstand
- 61: Lagerbauteil
- 62: zweiter Überstand
- 70: ringförmige Gleitfläche
- 75: Kraftübertragungsstellen

## Patentansprüche

1. Karusselltür (1) umfassend
• ein Drehkreuz (2) mit zumindest zwei Türflügeln (3), wobei das Drehkreuz (2) um eine Drehachse (5) drehbar ist, wobei entlang der Drehachse (5) eine Axialrichtung (5) und senkrecht zur Axialrichtung (5) eine Radialrichtung (6) definiert sind,
• einen elektrischen Antrieb (8), ausgebildet als elektronisch kommutierter Vielpolmotor mit einem Stator (10) umfassend ein Statorblechpaket (11) und mehrere Spulen (13), und einem Rotor (17), umfassend eine Rotorscheibe (34), ein Rotorblechpaket (18) und mehrere Permanentmagneten (19), und
• ein axiales Gleitlager (20) zwischen Stator (10) und Rotor (17), mit einer ringförmigen Gleitflache (70), die einen Gleitflächeninnendurchmesser (P) und eine Gleitflächenbreite (Q) aufweist,
• wobei der Rotor (17) koaxial zur Drehachse (4) angeordnet ist, und mit dem Drehkreuz (2) zum direkten, getriebelosen Antrieb verbunden ist, **dadurch gekennzeichnet, dass** der Stator (10) zumindest eine Anlauffläche, vorzugsweise aus Kunststoff, umfasst, wobei die Anlauffläche radial außerhalb des halben Statordurchmessers (M) ausgebildet ist, wobei die Anlauffläche im normalen Betrieb vom Rotor (17) beabstandet ist, und wobei bei einem Kippen des Rotors der Rotor (17) an der Anlauffläche anliegt und dass die zumindest eine Anlauffläche an Spulenkörpern (14) ausgebildet ist, wobei auf den Spulenkörpern (14) die Drähte der einzelnen Spulen (13) gewickelt sind, und/oder an zumindest einem Drahtführungselement (46) ausgebildet ist, wobei der Stator (10) radial innerhalb der Spulen (13) zumindest ein Drahtführungselement (46) in Ringform oder mehrere Drahtführungselemente (46) in Segmentform aufweist, wobei an dem zumindest einem Drahtführungselement (46) die Drähte der Spulen (13) geführt und/oder befestigt sind, wobei vorzugsweise mehrere Anlaufflächen durch mehrere sich in Axialrichtung (5) erstreckende Dome (48) gebildet sind, so dass die Rotorscheibe (34) bei Verkippen des Rotors (17) auf die Dome (48) auflegbar ist.

2. Karusselltür nach Anspruch 1, **dadurch gekennzeichnet, dass** das Statorblechpaket (11) einen geschlossenen Ring und radiale Zähne zum Aufstecken der Spulen (13) umfasst, wobei das Statorblechpaket (11) aus mehreren gestapelten Statorringen (24) zusammengesetzt ist, und wobei vorzugsweise der einzelne Statorring (24) aus mehreren in Umfangsrichtung nebeneinander angeordneten Statorsegmenten (25) zusammengesetzt ist.

3. Karusselltür nach einem der vorhergehenden Ansprüche, **dadurch gekennzeichnet, dass** das Rotorblechpaket (18) mehrere gestapelte Rotorringe (32) umfasst, wobei der einzelne Rotorring (32) vorzugsweise aus mehreren in Umfangsrichtung nebeneinander angeordneten Rotorsegmenten (33) zusammengesetzt ist, und wobei an der radialen Innenseite des Rotorblechpaketes (18) die Permanentmagneten (19) angeordnet sind.

4. Karusselltür nach einem der vorhergehenden Ansprüche, **dadurch gekennzeichnet, dass**
• der Gleitflächeninnendurchmesser (P) zumindest 40mm, vorzugsweise zumindest 45mm, besonders vorzugsweise zumindest 50mm, beträgt, und
• der Gleitflächeninnendurchmesser (P) höchstens 100mm, vorzugsweise höchstens 90mm, besonders vorzugsweise höchstens 80mm, beträgt,
und/oder
• die Gleitflächenbreite (Q) zumindest 1,5mm, vorzugsweise zumindest 2mm, besonders vorzugsweise zumindest 2,5mm, beträgt, und
• wobei die Gleitflächenbreite (Q) höchstens 10mm, vorzugsweise höchstens 8mm, besonders vorzugsweise höchstens 6mm, beträgt.

5. Karusselltür nach einem der vorhergehenden Ansprüche, **gekennzeichnet durch** ein Verhältnis (A/P) des Drehkreuzdurchmesser (A) zum Gleitflächeninnendurchmessers (P),
• wobei das Verhältnis (A/P) zumindest 20, vorzugsweise zumindest 23, besonders vorzugsweise zumindest 25, beträgt, und
• wobei das Verhältnis (A/P) höchstens 80, vorzugsweise höchstens 70, besonders vorzugsweise höchstens 65, beträgt.

6. Karusselltür nach einem der vorhergehenden Ansprüche, **gekennzeichnet durch** einen Gleitlagerkoeffizienten (R), wobei gilt 10000(P+Q)*Q=R*(A^2)/4
• wobei der Gleitlagerkoeffizient (R) zumindest 0,1, vorzugsweise zumindest 0,5, besonders vorzugsweise zumindest 1, beträgt, und
• wobei der Gleitlagerkoeffizient (R) höchstens 10, vorzugsweise höchstens 8, besonders vorzugsweise höchstens 5, beträgt.

7. Karusselltür nach einem der vorhergehenden Ansprüche, **gekennzeichnet durch** ein einstückiges Lagerbauteil (61) aus Kunststoff, an dem die ringförmige Gleitfläche (70) des axialen Gleitlagers und eine weitere Gleitfläche eines radialen Gleitlagers ausgebildet sind.

8. Karusselltür nach einem der vorhergehenden Ansprüche, **dadurch gekennzeichnet, dass** das Drehkreuz (2) direkt am Rotor (17) befestigt ist und an der Verbindungsstelle zwischen Drehkreuz (2) und Rotor (17) ein größter Kraftübertragungsdurchmesser (S) definiert ist.

9. Karusselltür nach Anspruch 8, **dadurch gekennzeichnet, dass** der Kraftübertragungsdurchmesser (S) zumindest 30%, vorzugsweise zumindest 50%, des Rotordurchmessers (B) beträgt.

10. Karusselltür nach Anspruch 8 oder 9, **gekennzeichnet durch** ein Verhältnis (S/A) des Kraftübertragungsdurchmessers (S) zum Drehkreuzdurchmesser (A),
• wobei das Verhältnis (S/A) zumindest 0,04, vorzugsweise zumindest 0,06, besonders vorzugsweise zumindest 0,08, beträgt, und
• wobei das Verhältnis (S/A) höchstens 0,6, vorzugsweise höchstens 0,4, besonders vorzugsweise höchstens 0,3, beträgt.

11. Karusselltür nach einem der Ansprüche 1 bis 7, **dadurch gekennzeichnet, dass** mittig an der Rotorscheibe (34) ein Antriebselement (9), vorzugsweise eine Antriebswelle, als Verbindung zum Drehkreuz angeordnet ist.

12. Karusselltür nach Anspruch 11, **dadurch gekennzeichnet, dass** an der dem Drehkreuz zugewandten Außenseite des Rotors (17) ein das Antriebselement (9) umgebendes elastisches Ausgleichelement angeordnet ist, wobei eine axiale Last über das Ausgleichselement auf dem Drehkreuz (2) abstützbar ist.

## Claims

1. A revolving door (1), comprising
• a turnstile (2) having at least two door leaves (3), wherein the turnstile (2) is rotatable about an axis of rotation (4), wherein an axial direction (5) along the axis of rotation (4) and a radial direction (6) vertically with regard to the axial direction (5) are defined,
• an electrical drive (8), configured as an electronically commuted multi-pole motor having a stator (10), comprising a laminated stator core (11) and several coils (13), and a rotor (17), comprising a rotor disc (34), a laminated rotor core (18), and several permanent magnets (19), and
• an axial anti-friction bearing (20) between the stator (10) and the rotor (17), with a ringshaped anti-friction surface (70), which includes an anti-friction surface inner diameter (P) and an anti-friction surface width (Q),
• wherein the rotor (17) is disposed coaxially with regard to axis of rotation (4), and is connected to the turnstile (2) for a direct gearless drive, **characterized in that** the stator (10), comprises at least one thrust surface, preferably made from plastic material, wherein the thrust surface is configured radially outside at half the stator diameter (M), wherein, in the normal operation, the thrust surface is spaced apart from the rotor (17), and wherein, upon tilting the rotor, the rotor (17) bears against the thrust surface, and **in that** at least one thrust surface is configured at the coil bodies (14), and wherein, on the coil bodies (14), the wires of the individual coils (13) are wound, and/or are configured at least at one wire guiding element (46), wherein the stator (10) radially within the coils (13) includes at least one wire guiding element (46) in ring shape or several wire guiding elements (46) in segment shape, wherein, at the at least one wire guiding element (46), the wires of the coils (13) are guided and/or attached, wherein preferably several thrust surfaces are formed by means of several domes (48) extending in axial direction (5), such that the rotor disc (34) may be placed onto the domes (48) upon tilting the rotor (17).

2. The revolving door according to claim 1, **characterized in that** the laminated stator core (11) comprises a closed ring and radial teeth for placing the coils (13) thereon, wherein the laminated stator core (11) is composed of several stacked stator rings (24), and wherein preferably the individual stator ring (24) is composed of several stator segments (25) disposed next to each other in circumferential direction.

3. The revolving door according to any of the preceding claims, **characterized in that** the laminated rotor core (18) comprises several stacked rotor rings (32), wherein the individual rotor rings (32) are preferably composed of several rotor segments (33) disposed next to each other in circumferential direction, and wherein the permanent magnets (19) are disposed at the radial inner side of the laminated rotor core (18).

4. The revolving door according to any of the preceding claims, **characterized in that**
• the anti-friction surface inner diameter (P) amounts at least to 40 mm, preferably at least to 45 mm, particularly preferred at least to 50 mm, and
• the anti-friction surface inner diameter (P) amounts at maximum to 100 mm, preferably at maximum to 90 mm, particularly preferred at maximum to 80 mm,
and/or
• the anti-friction surface width (Q) amounts at least to 1.5 mm, preferably at least to 2 mm, particularly preferred at least to 2.5 mm, and
• wherein the anti-friction surface width (Q) amounts at maximum to 10 mm, preferably at maximum to 8 mm, particularly preferred at maximum to 6 mm.

5. The revolving door according to any of the preceding claims, **characterized by** a ratio (A/P) of the turnstile diameter (A) to the anti-friction surface inner diameter (P),
• wherein the ratio (A/P) amounts at least to 20, preferably at least to 23, particularly preferred at least to 25, and
• wherein the ratio (A/P) amounts at maximum to 80, preferably at maximum to 70, particularly preferred at maximum to 65.

6. The revolving door according to any of the preceding claims, **characterized by** an anti-friction bearing coefficient (R), wherein 10000 (P + Q)*Q = R (A ^ 2)/4,
• wherein the anti-friction bearing coefficient (R) amounts at least to 0.1, preferably at least to 0.5, particularly preferred at least to 1, and
• wherein the anti-friction bearing coefficient (R) amounts at maximum to 10, preferably at maximum to 8, particularly preferred at maximum to 5.

7. The revolving door according to any of the preceding claims, **characterized by** an integral structural bearing component (61) made from plastic material, at which are configured the ringshaped anti-friction surface (70) of the radial anti-friction bearing, and another anti-friction surface of a radial anti-friction bearing.

8. The revolving door according to any of the preceding claims, **characterized in that** the turnstile (2) is directly attached to the rotor (17) and, at the connecting location, between the turnstile (2) and the rotor (17), is defined a largest force transmission diameter (S).

9. The revolving door according to claim 8, **characterized in that** the force transmission diameter (S) amounts at least to 30 %, preferably at least to 50 % of the rotor diameter (B).

10. The revolving door according to claim 8 or 9, **characterized by** a ratio (S/A) of the force transmission diameter (S) to the turnstile diameter (A),
• wherein the ratio (S/A) amounts at least to 0.04, preferably at least to 0.06, particularly preferred at least to 0.08, and
• wherein the ratio (S/A) amounts at maximum to 0.6, preferably at maximum to 0.4, particularly preferred at maximum to 0.3.

11. The revolving door according to any of the claims 1 to 7, **characterized in that**, centrally at the rotor disc (34), a drive element (9), preferably a drive shaft, is disposed as a connection to the turnstile.

12. The revolving door according to claim 11, **characterized in that**, at the exterior side of the rotor (17) facing the turnstile, an elastic compensating element is disposed surrounding the drive element (9), wherein an axial load is supportable on the turnstile (2) via the compensating element.

## Revendications

1. Porte tambour (1), comportant
• un tourniquet (2) ayant au moins deux vantaux de porte (3), le tourniquet (2) étant rotatif autour d'un axe de rotation (4), dans lequel sont définies le long de l'axe de rotation (4), une direction axiale (5), et verticalement par rapport à la direction axiale (5), une direction radiale (6),
• un entraînement électrique (8), aménagé comme moteur à pôles multiples commutant électroniquement avec un stator (10), comportant un empilage de tôles de stator (1) et plusieurs bobines (13), et un rotor (17), comportant un empilage de tôles de rotor (18) et plusieurs aimants permanents (19), et
• un palier à glissement axial (20) entre le stator (10) et le rotor (17), avec une surface de glissement (70) en forme d'anneau, laquelle présente un diamètre intérieur de surface de glissement (P) et une largeur de surface de glissement (Q),
• dans laquelle le rotor (17) est agencé coaxialement par rapport à l'axe de rotation (4), et est connecté au tourniquet (2) pour un entraînement direct sans engrenage, **caractérisée en ce que** le stator (10) comporte au moins une surface de butée, de préférence faite en matière plastique, la surface de butée étant aménagée radialement à l'extérieur de la moitié du diamètre de stator (M), et, pendant l'opération normale, la surface de butée étant espacée du rotor (17), et, lors d'un basculement du rotor, le rotor (17) se pose sur la surface de butée, et **en ce que** ladite au moins une surface de butée est aménagée sur les corps de bobines (14), les fils des bobines (13) individuelles étant enroulés sur les corps de bobines (14), et/ou aménagés sur au moins un élément de guidage de fil (46), le stator (10) présentant radialement à l'intérieur des bobines (13) au moins un élément de guidage de fil (46) en forme d'anneau ou plusieurs éléments de guidage de fil (46) en forme de segments, les fils des bobines (13) étant guidés et/ou attachés sur ledit au moins un élément de guidage de fil (46), de préférence plusieurs surfaces de butée étant aménagées par l'intermédiaire de plusieurs dômes (48) s'étendant en direction axiale (5), de sorte que le disc de rotor (34) lors d'un basculement du rotor (17) peut se poser sur les dômes (48).

2. Porte tambour selon la revendication 1, **caractérisée en ce que** l'empilage de tôles de stator (11) comporte un anneau fermé et des dents radiales pour le garnissage des bobines (13), l'empilage de tôles de stator (11) étant composé de plusieurs anneaux de stator (24) empilés, et de préférence l'anneau de stator (24) individuel étant composé de plusieurs segments de stator (25) agencés l'un à côté de l'autre dans la direction circonférentielle.

3. Porte tambour selon l'une des revendications précédentes, **caractérisée en ce que** l'empilage de tôles de rotor (18) comporte plusieurs anneaux de rotor (32) empilés, les anneaux de rotor (32) étant composés de préférence de plusieurs segments de rotor (33) agencés les uns à côté de des autres dans la direction circonférentielle, et les aimants permanents (19) étant agencés sur la face intérieure radiale de l'empilage de tôles de rotor (18).

4. Porte tambour selon l'une des revendications précédentes, **caractérisée en ce que**
• le diamètre intérieur de surface de glissement (P) s'élevant au moins à 40 mm, de préférence au moins à 45 mm, tout particulièrement préféré au moins à 50 mm, et
• le diamètre intérieur de surface de glissement (P) s'élevant au maximum à 100 mm, de préférence au maximum à 90 mm, tout particulièrement préféré au maximum à 80 mm, et/ou
• la largeur de surface de glissement (Q) s'élevant au moins à 1,5 mm, de préférence au moins à 2 mm, tout particulièrement préféré à au moins 2,5 mm, et
• la largeur de surface de glissement (Q) s'élevant au maximum à 10 mm, de préférence au maximum à 8 mm, tout particulièrement préféré au maximum à 6 mm.

5. Porte tambour selon l'une des revendications précédentes, **caractérisée par** un rapport (A/P) du diamètre de tourniquet (A) au diamètre intérieur de surface de glissement (P),
• le rapport (A/P) s'élevant au moins à 20, de préférence au moins à 23, tout particulièrement préféré à au moins à 25, et
• le rapport (A/Q) s'élevant au maximum à 80, de préférence au maximum à 70, tout particulièrement préféré au maximum à 65.

6. Porte tambour selon l'une des revendications précédentes, **caractérisée par** un coefficient de palier de glissement (R), dans lequel 1000 (P + Q) * Q = R * (A ^ 2) / 4,
• le coefficient de palier de glissement (R) s'élevant au moins à 0,1, de préférence au moins à 0,5, tout particulièrement préféré à au moins à 1, et
• le coefficient de palier de glissement (R) s'élevant au maximum à 10, de préférence au maximum à 8, tout particulièrement préféré au maximum à 5.

7. Porte tambour selon l'une des revendications précédentes, **caractérisée par** un composant de palier intégrale (61) fait en matière plastique, sur lequel sont aménagées la surface de glissement (70) en forme d'anneau du palier de glissement axial et une autre surface de glissement d'un palier de glissement radial.

8. Porte tambour selon l'une des revendications précédentes, **caractérisée en ce que** le tourniquet (2) est directement attaché sur le rotor (17), et à l'endroit de connexion entre le tourniquet (2) et le rotor (17) est définit un diamètre de transmission de force le plus grand.

9. Porte tambour selon la revendication 8, **caractérisée en ce que** le diamètre de transmission de force (S) s'élève au moins à 30 %, de préférence au moins à 50 %, du diamètre du rotor (B).

10. Porte tambour selon la revendication 8 ou 9, **caractérisée par** un rapport (S/A) du diamètre de transmission de force (S) au diamètre de tourniquet (A),
• le rapport (A/P) s'élevant au moins à 0,04, de préférence au moins à 0,06, tout particulièrement préféré au moins à 0,08, et
• le rapport (A/Q) s'élevant au maximum à 0,6, de préférence au maximum à 0,4, tout particulièrement préféré au maximum à 0,3.

11. Porte tambour selon l'une des revendications 1 à 7, **caractérisée en ce qu'**un élément d'entraînement (9), de préférence un arbre d'entraînement, comme connexion au tourniquet est agencé au centre du disc de rotor (34).

12. Porte tambour selon la revendication 11, **caractérisée en ce que** sur la face extérieure du rotor (17) orientée vers le tourniquet, est agencé un élément de compensation élastique entourant l'élément d'entraînement (9), une charge axiale étant supportable sur le tourniquet (2) par l'intermédiaire de l'élément de compensation.
